# EUROPEAN PATENT SPECIFICATION

(11) **EP 1 270 896 B1**
(45) Date of publication and mention of the grant of the patent: **03.09.2008**
(21) Application number: 02445079.3
(22) Date of filing: 19.06.2002
(51) Int. Cl.: F02B 29/04, F01P 7/16

(54) **Method and device for cooling charge air and hydraulic oil**
Methode und Vorrichtung zur Kühlung von Ladeluft und Hydrauliköl
Méthode et dispositif pour refroidir l'air de suralimentation et l'huile hydraulique

(30) Priority: 28.06.2001 SE 0102296
(43) Date of publication of application: 02.01.2003
(73) Proprietor: Valeo Engine Cooling AB, 294 02 Sölvesborg (SE)
(72) Inventor: Valaszkai, Laszlo, 294 38 Sölvesborg (SE); Karlsson, Marcus, 291 36 Kristianstad (SE); Jouannet, Bruno, 294 34 Sölvesborg (SE)
(74) Representative: Rolland, Jean-Christophe

(56) References cited:
- DE-A1- 2 014 169
- DE-A1- 19 914 999
- DE-A1- 19 942 728
- US-A1- 4 620 509

## Description

### Field of the Invention

The present invention relates to a cooling device for cooling charge air from a compressor in an engine and hydraulic oil from a retarder, in which cooling device a first coolant flow is provided in a coolant conduit.

The invention further relates to a method utilizing a cooling device of the above type for cooling charge air from a compressor in an engine and hydraulic oil from a retarder.

### Background Art

Transport vehicles, such as lorries, have engines, for example diesel engines and petrol engines, which are often equipped with a compressor, for instance a turbo charger. The turbo charger uses the exhaust gases from the engine to compress charge air, which is then supplied to the engine. Heat is generated during compression, i.e. the temperature of the charge air increases. The charge air is cooled in a charge-air cooler before it is fed to the engine in order to increase the density of the air and thus the mass flow of air that can be fed to the engine. The charge-air cooler is usually cooled by ambient air, which is drawn through the charge-air cooler by a cooling fan.

New engines, which have lower emissions of NOx than older ones, are equipped with turbo chargers that provide a higher charge-air pressure. In many cases, the amount of air and the output of the engine are also increased. This means that both the temperature and the mass flow of the charge air increase, leading to an increase by about 50% of the amount of heat that has to be cooled off in the charge-air cooler. Since the size of both the front area and the engine compartment of a diesel lorry is limited and can hardly be increased, the increased cooling load must be accommodated by increased power consumption in the cooling fan.

A retarder is a hydraulic auxiliary brake, for example of the type described in GB 974,663, which uses hydraulic oil pumped into it to help brake the vehicle. Retarders are frequently used in large diesel lorries. Considerable heat is generated in the hydraulic oil when braking by means of the retarder. For this reason, the hydraulic oil is cooled by a coolant that is pumped via the engine to a retarder cooler.

US 5,394,854 discloses a method for cooling charge air by means of two radiators and two liquid-cooled charge-air coolers. A heat exchanger is also provided for cooling different oils, such as engine oil, lubricating oil and, possibly, the hydraulic oil of a retarder.

A drawback of the methods described above is that they require large cooling water capacity, they cause a large pressure drop in the cooling water circuit and/or require several radiators and charge-air coolers.

### Summary of the Invention

The object of the present invention is to provide a device for cooling charge air and for cooling hydraulic oil from a retarder, which device causes a small pressure drop in the coolant circuit and uses few components.

According to the invention, this object is achieved by a cooling device that is of the type described by way of introduction and that has the features stated in claim 1.

Preferably, both the retarder cooler and the first charge-air cooler are connected downstream of the engine with regard to the circulation of the coolant. The advantage of such a connection is that the engine will always be cooled by a coolant having the lowest possible temperature, i.e. a coolant that has not been heated in a charge-air cooler or a retarder cooler. A coolant with a low temperature increases the life of the engine oil. In addition, the engine will be cooled by the whole first coolant flow, which reduces the total coolant flow required.

Suitably, a coolant circuit is adapted to cause the coolant to by-pass the first charge-air cooler. This reduces the pressure drop in the first charge-air cooler and thus reduces the energy consumption of a coolant pump.

According to a preferred embodiment, the first charge-air cooler and the retarder cooler are connected in parallel with regard to the circulation of the coolant, a valve being adapted to cut off the second coolant flow when the retarder is activated. When the retarder is activated, i.e. when braking a vehicle, no cooling of the charge air is needed. Thus, all the coolant is conducted to the retarder cooler for maximum cooling thereof. When the engine drives the vehicle, the second charge-air cooler is cooled by the second coolant flow while the retarder cooler is cooled by a third coolant flow, which is smaller than the corresponding flow during braking.

Preferably, said valve is a priority valve, which in the case of a malfunction always directs the second coolant flow to the first charge-air cooler. This ensures that, when the engine drives the vehicle, the charge air can be cooled also in the case of a malfunction in the valve, the control system or the like.

Suitably, the cooling device has a conduit system for circulating a coolant and, included therein, a main thermostat, which is adapted to supply a portion of the first coolant flow ranging from 0 to 100% depending on the temperature of said first coolant flow to a radiator, which is cooled by means of ambient air, the engine, the first charge-air cooler and the retarder cooler being all located in the part of the conduit system in which the quantity of coolant flow is essentially unaffected by the main thermostat. One advantage of this embodiment is that, regardless of the operation of the main thermostat, coolant is always supplied to the first charge-air cooler, the retarder cooler and the engine, which reduces the risk of these being damaged. Another advantage is that the temperature control will be very simple. Only one main thermostat is needed to ensure that coolant flows, the temperature of which will not be too high, are supplied to the first charge-air cooler, the retarder cooler and the engine. It is thus easy to adapt the cooling device to existing temperature controls. Nor are any supplementary components needed for the temperature control, besides a main thermostat.

Suitably, the second coolant flow is at least 50% greater than the coolant flow at which the charge air would cause the coolant to boil in the first charge-air cooler, but amounts to a maximum of about 35% of said first coolant flow. A second coolant flow that has been optimised as stated above provides surprisingly good cooling of the charge air and, at the same time, only a small flow of coolant is required and the pressure drop in the coolant is small. These effects both serve to reduce the energy consumption of a coolant pump.

Suitably, the first charge-air cooler, at the operating point in which the engine develops maximum output and in which the charge air supplied to the first charge-air cooler has a temperature of 200-270°C, presents a maximum charge-air pressure drop of 4000 Pa and a charge air cooling capacity of more than 5 kW per dm³ cooler volume. The excess pressure built up in the charge air by a compressor should be maintained to the extent possible when supplying the charge air to the engine. Suitably, the pressure drop on the charge air side amounts to a maximum of about 13000 Pa when the engine develops maximum output. A second charge-air cooler, which is cooled by ambient air and which is suitably arranged in the front of a transport vehicle, has a pressure drop of about 9000 Pa. The pressure drop in the first charge-air cooler should thus be a maximum of about 4000 Pa since, otherwise, considerable remodelling of the engine compartment will be required due to the fact that the second charge-air cooler will have to be made larger to provide a reduced pressure drop therein. The first charge-air cooler should be a high-efficiency cooler, i.e. it should have a satisfactory cooling effect on the charge air while requiring only very little space, since the space in the engine compartment of a transport vehicle is often very limited.

Another object of the present invention is to provide a method, wherein hydraulic oil from a retarder and charge air are cooled using only a small amount of energy.

According to the invention, this object is achieved by a method as defined in claim 9.

Preferably, the first coolant flow is first conducted through the engine and then used to cool the first charge-air cooler and the retarder cooler. As mentioned above, the engine is advantageously cooled by the whole first coolant flow and at the lowest possible temperature.

Suitably, the second coolant flow is cut off 1-10 s after the retarder has been activated. This ensures that the first charge-air cooler has been cooled to a temperature that is sufficiently low to avoid boiling before the second coolant flow is cut off.

### Brief Description of the Drawings

The invention will be described in more detail in the following by means of embodiments and with reference to the accompanying drawings, in which
Fig. 1 is a schematic view of a first embodiment of a cooling device according to the present invention;
Fig. 2 is a schematic view of a second embodiment of a cooling device according to the present invention;
Fig. 3 is a schematic view of a third embodiment of a cooling device according to the present invention;
Fig. 4 is a view of a first charge-air cooler adapted to be used in a cooling device according to the present invention;
Fig. 5 is a diagram illustrating one example of a heat balance measured during use of the cooling device of Fig. 1; and
Fig. 6 is a diagram illustrating the pressure drop in the coolant as a function of the coolant flow for a first charge-air cooler used in the example shown in Fig. 5.

### Description of Preferred Embodiments

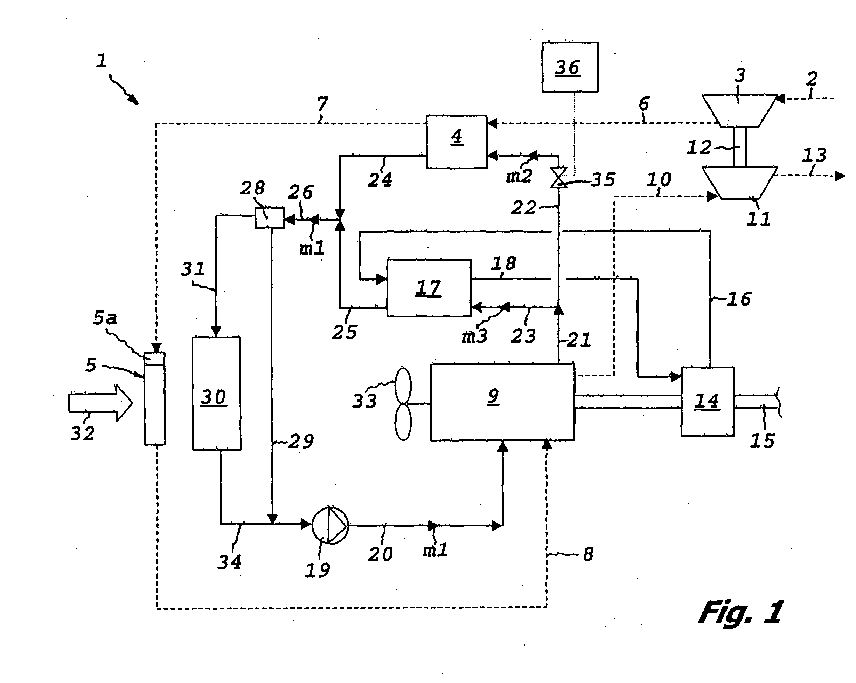

Fig. 1 illustrates a first embodiment of a cooling device according to the invention as arranged in a driving unit 1 for a lorry. The cooling device acts to cool charge air that has been supplied to a compressor 3 through a conduit 2. The cooling device has a first charge-air cooler 4 and a second charge-air cooler 5. The charge air is conducted through a conduit 6 from the compressor 3 to the first charge-air cooler 4. The charge air cooled therein is then conducted through a conduit 7 to the second charge-air cooler 5. The second charge-air cooler 5 has a charge-air inlet 5a, which is made of a cast aluminium blank. The charge air is conducted from the second charge-air cooler 5 through a conduit 8 to a diesel engine 9. In the engine 9, exhaust gases are produced which are conducted through a conduit 10 to an exhaust gas turbine 11, which drives the compressor 3 by means of a shaft 12. The exhaust gases are conducted via a conduit 13 to an after-treatment system (not shown) comprising, for example, sound damping and exhaust emission control.

The driving unit 1 is also provided with a retarder 14, which is connected to a shaft 15 extending from the engine 9, said shaft extending through the retarder 14 and being adapted to drive driving wheels (not shown) of the lorry. To brake the lorry the retarder 14 is filled with oil from a hydraulic oil reservoir (not shown). The hydraulic oil in the retarder 14 is conducted through a conduit 16 to a retarder cooler 17. The hydraulic oil is cooled in the retarder cooler 17 and then recirculated through a conduit 18 to the retarder 14.

A coolant pump 19, which is driven by the engine 9, pumps a first coolant flow m1 through a conduit 20 to the engine 9. The coolant cools the engine 9 and is then discharged from the engine 9 through a conduit 21. The coolant flow in the conduit 21 is divided into a first subflow in the form of a second coolant flow m2, which is conducted to the first charge-air cooler 4 through a conduit 22, and a second subflow in the form of a third coolant flow m3, which is conducted to the retarder cooler 17 through a conduit 23.

The second coolant flow m2 is discharged from the first charge-air cooler 4 through a conduit 24 and the third coolant flow m3 is discharged from the retarder cooler 17 through a conduit 25. The second and the third coolant flows m2 and m3, respectively, are brought together in a conduit 26 to restore the first coolant flow m1. The coolant flow thus brought together is conducted to a main thermostat 28, which is adapted to sense the temperature of the coolant. When the temperature of the coolant is low, for example when the engine 9 is started, the main thermostat 28 will lead the main part of the coolant flow or all of it through a conduit 29 back to the coolant pump 19. As the temperature of the coolant rises, the thermostat 28 will direct at least part of the coolant flow to a radiator 30 through a conduit 31. In the radiator 30, the coolant is cooled by a flow of ambient air 32, which is drawn through the radiator 30 and the second charge-air cooler 5 by means of a cooling fan 33 driven by the engine 9. The coolant cooled in the radiator 30 is conducted through a conduit 34 to the coolant pump 19.

The cooling device also has a priority valve 35, which is mounted in the conduit 22 through which the second coolant flow m2 is supplied to the first charge-air cooler 4. When the engine 9 drives the lorry, the valve 35 is open to allow coolant to flow to the first charge-air cooler 4. When braking the lorry, the priority valve 35 is closed and all the coolant in the conduit 21 will be directed to the retarder cooler 17 through the conduit 23. The priority valve 35 has a prioritising function, which means that in the case of a malfunction in the control of the valve 35 or in the control unit 36 thereof the valve 35 will always be open to allow coolant to flow to the first charge-air cooler 4. In the case of a malfunction, a signal is also sent to the lorry driver indicating that the cooling capacity of the retarder cooler 17 is limited and that the lorry should be taken to a garage.

The control unit 36 is adapted to control the function of the valve 35. When a braking operation is initiated the control unit 36 sends a closing signal to the valve 35. The valve 35 is then closed, suitably with a delay of about 1 to 10 s. This delay ensures that the first charge-air cooler 4 has been sufficiently cooled to avoid any local overheating before the valve 35 cuts off the coolant flow. When the engine 9 again starts to drive the vehicle the valve 35 is immediately opened to prevent the coolant from boiling in the first charge-air cooler 4 as hot charge air is again injected therein.

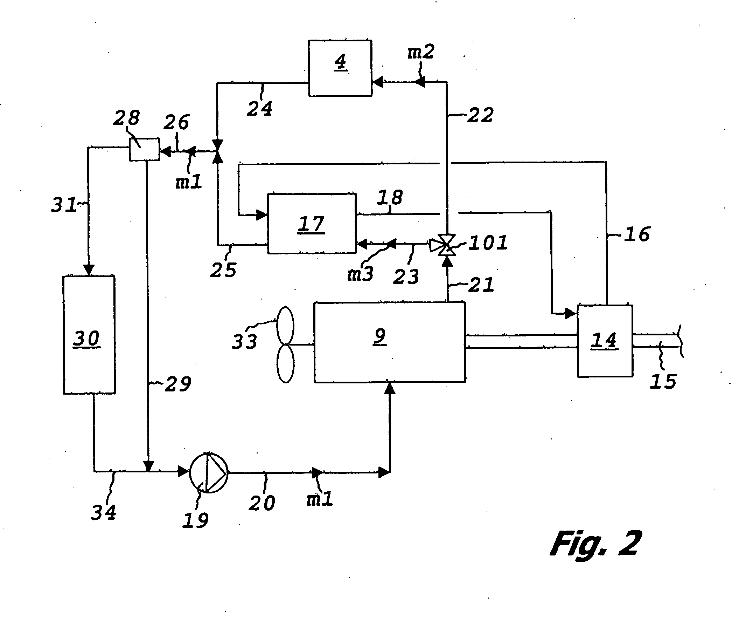

Fig. 2 illustrates a second embodiment of the invention. In this embodiment, charge air and exhaust gases are conducted in the same way as in Fig. 1 and, therefore, this is not illustrated in Fig. 2. The cooling device is identical to the embodiment shown in Fig. 1 also in other respects, the only exception being that the priority valve 35 has been replaced by a priority valve in the form of a three-way valve 101. The three-way valve 101 is connected to conduits 21, 22 and 23 in a manner which allows it to direct the first coolant flow m1 coming from the engine 9 through the conduit 21 to the first charge-air cooler 4 and the retarder cooler 17. When the engine is driving the lorry, the opening position of the three-way valve 101 is such that said valve 101 will direct a second coolant flow m2 to the first charge-air cooler 4 through the conduit 22 and a third coolant flow m3 to the retarder cooler 17 through the conduit 23. When braking the lorry the three-way valve changes its position and cuts off the second coolant flow m2 through the conduit 22. Like the priority valve 35, the three-way valve 101 has a prioritising function, which means that in the case of a malfunction in the control of the valve 101 or in the control unit 36 thereof (not shown) the valve 101 will always be open and direct the second coolant flow m2 to the first charge-air cooler 4.

A major advantage of the embodiments illustrated in Figs 1 and 2 is that the coolant is optimally used. When the engine 9 is used to drive the lorry, a portion of the first coolant flow m1 wil be supplied to the first charge-air cooler 4 to cool the charge air. Under these circumstances no or very little cooling of the hydraulic oil of the retarder 14 is required. When braking the lorry, the hydraulic oil of the retarder 14 is heated. Each valve 35 and 101, respectively, then cuts off the coolant supply to the first charge-air cooler 4 and directs all the coolant through the conduit 23 to the retarder cooler 17. During the braking operation, no charge air is compressed in the compressor 3 and, thus, no coolant has to be supplied to the first charge-air cooler 4. When the engine 9 is again operated to drive the lorry, the valve 35, 101 is opened and coolant is again supplied to the first charge-air cooler 4 through the conduit 22. When the valve 35, 101 is open and directs a second coolant flow m2 to the first charge-air cooler 4 and, at the same time, a third coolant flow m3 to the retarder cooler 17, the total pressure drop in the coolant circuit will be small - owing to the fact that coolant is led through both the retarder cooler 17 and the first charge-air cooler 4, which are connected in parallel - compared with the situation in which the whole first coolant flow m1 is, at all times, conducted only through the retarder cooler 17. This allows energy to be saved in the coolant pump 19 when the engine 9 is driving the vehicle. During a braking operation, the pressure drop in the coolant circuit will be greater since the whole coolant flow is conducted through the retarder cooler 17. This, however, is to be considered an advantage since the increased pressure drop will slightly enhance the engine braking effect of the engine. The optimal use of the coolant, i.e. that both the retarder cooler 17 and the first charge-air cooler 4 are able to utilize the first coolant flow m1 due to the fact that their respective maximum cooling needs do not arise in the same operating situations, reduces the total coolant flow required, which further reduces the power consumption of the coolant pump.

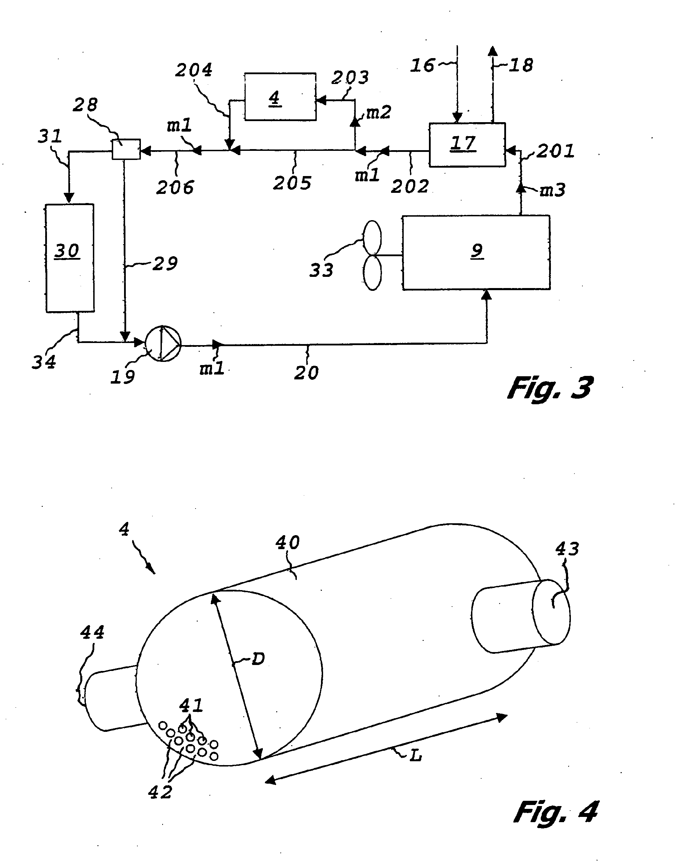

Fig. 3 illustrates a third embodiment of the invention. In this embodiment, charge air and exhaust gases are conducted in the same way as in Fig. 1 and, therefore, this is not illustrated in Fig. 3. The cooling device is identical to the embodiment shown in Fig. 1 also in other respects, the only exception being that the retarder cooler 17 and the first charge-air cooler 4 are connected in a different manner. With reference to Fig. 3, a retarder (not shown) supplies hot hydraulic oil to the retarder cooler 17 through a conduit 16. The hydraulic oil is cooled in the retarder cooler 17 and then recirculated through a conduit 18 to the retarder 14. A first coolant flow m1 is discharged from the engine 9 and conducted in the form of a third coolant flow m3 through a conduit 201 to the retarder cooler 17 for the purpose of cooling said retarder cooler. In this third embodiment, the third coolant flow m3 thus consists of the whole first coolant flow m1. The third coolant flow m3 is discharged from the retarder cooler 17 through a conduit 202 to "restore" the first coolant flow m1. The first coolant flow m1 thus restored is then divided into two subflows. A first subflow is conducted in the form of a second coolant flow m2 through a conduit 203 to a first charge-air cooler 4. The second coolant flow m2 is discharged from the first charge-air cooler 4 through a conduit 204. A second subflow is conducted through a by-pass conduit 205 past the first charge-air cooler 4. The second coolant flow m2 and the second subflow are brought together to restore the first coolant flow m1, which is conducted to the main thermostat 28 through a conduit 206. The main thermostat 28 and the radiator 30 work in the way described above.

A further advantage of this third embodiment is that the coolant is optimally utilized. When the engine 9 is driving the lorry, i.e. when no braking occurs, the coolant discharged from the retarder cooler 17 will have a low temperature, which provides a satisfactory driving force for the cooling in the first charge-air cooler 4. During a braking operation, which causes the temperature of the hydraulic oil in the retarder to increase, the temperature of the coolant discharged from the retarder cooler 17 will increase. However, no cooling of the charge-air cooler 4 will then be required. Thus, only a relatively small total coolant flow is required to cool the engine 9, the first charge-air cooler 4 and the retarder cooler 17. Owing to the by-pass conduit 205, the pressure drop in the coolant circuit and, thus, the power consumption of the coolant pump 19 decreases. However, the pressure drop in the coolant circuit will be slightly greater than in the embodiments illustrated in Figs 1 and 2. Another advantage of this embodiment is that it may, in many cases, suitably be additionally fitted to lorries that are already equipped with a retarder cooler 17.

Alternatively, it is also possible in this third embodiment to connect the retarder cooler 17 downstream of the first charge-air cooler 4. In this case, the retarder cooler is provided in the conduit 206, i.e. downstream of the place where the first coolant flow m1 is formed anew.

The positioning, as shown in Figs 1, 2 and 3, of both the engine 9 and the first charge-air cooler 4 and the retarder cooler 17 on the same side (upstream) of the main thermostat 28 provides several advantages. One important aspect is that it is ensured that coolant will always pass through the charge-air cooler 4 and the retarder cooler 17, even when the coolant is cold and the main thermostat 28 therefore will not allow any coolant or will allow only very little coolant to reach the radiator 30. Since the mass of the components constituting the charge-air system is smaller than the mass of the engine 9, the charge air will quickly reach its working temperature and, thus, the coolant will have to be circulated immediately after the lorry has been started in order to prevent it from boiling in the charge-air cooler 4. The heat transferred from the charge air to the coolant will cause the engine 9 to reach its working temperature faster, thus reducing the emissions, since the main thermostat 28 recirculates the main part of the coolant, which partly has been heated by the first charge-air cooler 4, directly to the engine 9, i.e. not via the radiator 30. A certain coolant flow should always be supplied also to the retarder cooler 17 to avoid boiling.

Since the coolant flows m2 and m3 are brought together in the conduit 26, any differences in the temperatures of the coolant flows m2, m3 will be levelled out. If the temperature of the restored first coolant flow m1 in the conduit 26 (or the corresponding conduit 206 in the embodiment according to Fig. 3) is too high, the main thermostat 28 will direct a portion of the coolant to the radiator 30, which will cause the temperature of the coolant to decrease. In this manner, using only a very simple control comprising the main thermostat 28 and a control unit (not shown), if any, connected thereto, it is ensured that the temperature of the coolant supplied to the first charge-air cooler 4, the retarder cooler 17 and the engine 9 will not be too high.

Fig. 4 illustrates a first charge-air cooler 4, which is intended for a large lorry. The first charge-air cooler 4, which is a high-efficiency heat exchanger of the "tube-in-shell" type, comprises an exterior shell 40. "High-efficiency" here means that the exterior volume of the heat exchanger is small but that nevertheless it is capable of transferring a large amount of heat from the charge air to the coolant without causing a great pressure drop in the flow of charge air.

The exterior shell 40 supports, together with a sealing end plate (not shown in Fig. 4), a number of tubes 41 (only a few of which are shown in Fig. 4) and forms a space 42 for the coolant. The coolant is supplied to the first charge-air cooler 4 through an inlet 43.
The inlet 43 is connected to the conduit 22 or 203 (see Figs 1-3) that conducts coolant to the charge-air cooler 4. The coolant is then introduced into the space 42 formed in the exterior shell 40 between the tubes 41 and caused to flow towards an outlet 44. The outlet 44 is connected to the conduit 24 or 204 (see Figs 1-3) that conducts coolant from the charge-air cooler 4.

The charge air is introduced through the conduit 6 (see Fig. 1) into the tubes 42 where it is cooled by the coolant flowing in the space 42. The cooled charge air is then discharged from the first charge-air cooler 4 through the conduit 7 (see Fig. 1).

The pressure drop on the charge-air side of the first charge-air cooler 4 should not exceed 4000 Pa, more preferred about 3000 Pa at the operating point in which the engine 9 develops maximum output. A maximum pressure drop of about 9000 Pa can then be allowed in the second charge-air cooler 5, without too much of the charge-air pressure provided by the compressor 3 being lost.

The cooling capacity of the first charge-air cooler 4 is calculated from the total volume of the heat exchanger (connecting flanges, inlets and outlets not included) and the amount of heat that can be transferred to the charge air when the temperature of the charge air supplied to the charge-air cooler 4 is 200-270°C and the engine develops maximum output. The cooling capacity should be at least 5 kW/dm³, more preferred at least 7.5 kW/dm³.

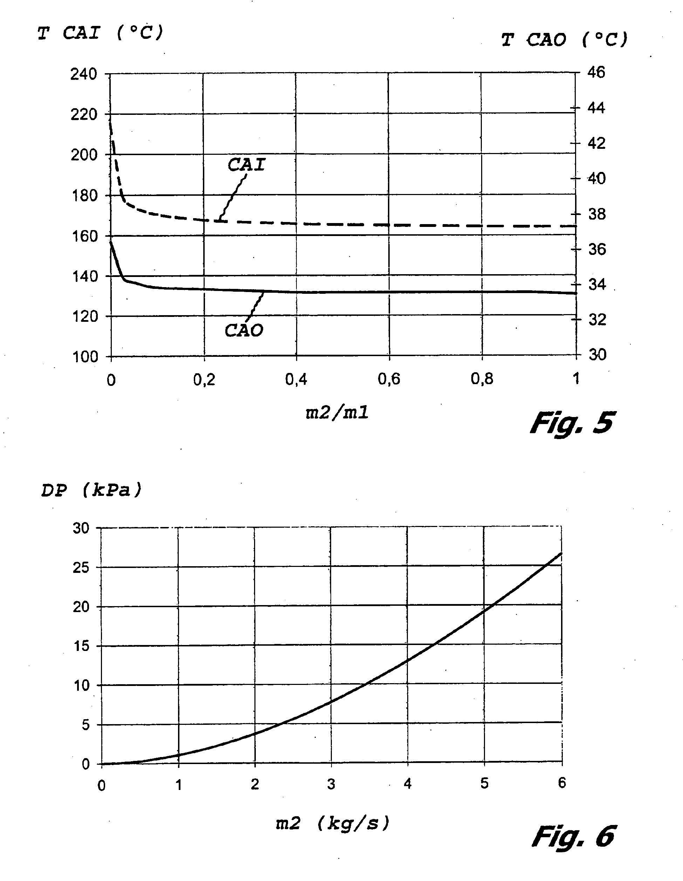

Figs 5-6 illustrate exemplifying graphs for a first charge-air cooler 4, which is of the high-efficient type shown in Fig. 4 and which, in accordance with the embodiment shown in Fig. 1, has been installed in a lorry, said lorry being equipped with a diesel engine having a maximum output of about 300 kW. In this example, the first charge-air cooler 4 has 168 tubes 41 of steel with an inner diameter of 6 mm and an outer diameter of 7 mm.
The outer diameter D of the first charge-air cooler 4 is 150 mm and its length L (which is the same as the length of the tubes 41) is 250 mm. Thus, according to the above definition, the outer volume of the first charge-air cooler 4 is only 4.4 dm³.

At a charge-air flow of 0.6 kg/s at maximum output from the above diesel engine and a second coolant flow m2 amounting to about 20% of the first coolant flow m1 about 29 kW are transferred in the first charge-air cooler 4, which is equivalent to a cooling capacity of about 29 kW/4.4 dm³ = 6.6 kW/dm³. The pressure drop regarding the charge air in the first charge-air cooler 4 will then be 3600 Pa.

As shown in Fig. 5, the first charge-air cooler 4 causes the temperature CAI of the charge air supplied to the second charge-air cooler 5 to decrease from about 215°C to about 168°C when the second coolant flow m2 is increased from 0 to about 20% of the first coolant flow m1. The temperature CAO of the charge air discharged from the second charge-air cooler 5 (through the conduit 8) will then decrease from about 36.5°C to about 33.8°C, which improves the output of the engine 9. In addition, the life of both the aluminium inlet 5a and the other parts of the second charge-air cooler 5 will be prolonged if the temperature in the charge air supplied to the second charge-air cooler 5 is lower than 200°C.

It is also apparent from Fig. 5 that, surprisingly, an increase of the second coolant flow m2 to more than 35% of the first coolant flow m1 wil result in a very modest increase of the heat transfer in the first charge-air cooler 4.

The coolant used contained about 50% by weight of glycol, the rest being water. In such a composition and at the current pressure, the boiling point of the coolant is about 114°C. This boiling point corresponds to a second coolant flow m2 which is about 4% of the first coolant flow m1. Excellent cooling of the charge air is provided by the first charge-air cooler 4, as shown in Fig. 5, even at this very small coolant flow m2. However, in the first charge-air cooler 4, which is of the high-efficient type mentioned above, there is a risk of uneven temperature distribution, uneven coolant flow and "hot spots" occurring. To avoid local boiling the flow m2 should be at least 50% greater than the flow at which boiling occurs, preferably at least twice as great as the flow at which boiling occurs. Thus, in the case illustrated in Fig. 5, the second coolant flow m2 should be at least 6%, preferably at least 8%, of the first coolant flow m1. Thus, the second coolant flow m2 is at least 50% greater, based on an even temperature and fluid distribution without "hot spots" in the first charge-air cooler 4, than the flow at which the charge-air would make the coolant boil in the first charge-air cooler 4.

Fig. 6 illustrates the pressure drop DP for the coolant for a first charge-air cooler 4 of the above design as a function of the second coolant flow m2. The first coolant flow m1 in an engine 9 having the above performance is about 6 kg/s. If the entire flow passes through the first charge-air cooler 4, the pressure drop will, as shown in Fig. 6, be about 26.5 kPa. At a second coolant flow m2 which is about 20% of the first coolant flow, i.e. about 1.2 kg/s, the pressure drop will only be about 1.5 kPa. Accordingly, the invention allows a surprisingly large amount of power to be saved in the coolant pump 19 without affecting the cooling of the charge air in a negative way. In the embodiments shown in Figs 2 and 3, essentially the same result as that described above regarding the embodiment in Fig. 1 would be obtained under otherwise similar circumstances.

The total pressure drop from the conduit 21 to the conduit 26 in the embodiment shown in Fig. 1 is about 21 kPa, when only the retarder cooler 17 is connected, i.e. when the valve 35 is closed, and decreases to about 13 kPa when 20% of the first coolant flow m1 in the form of the second coolant flow m2 is directed to the first charge-air cooler 4 and the remaining 80% of the first coolant flow m1 in the form of the third coolant flow m3 is directed to the retarder cooler 17.

Suitably, the second coolant flow m2 does not amount to more than about 35% of the first coolant flow m1, preferably not more than 25% of the first coolant flow m1 and more preferred not more than 20% of the first coolant flow m1. The optimal solution is often to use a second coolant flow m2 that lies as close as possible to the coolant flow at which the charge air would cause the coolant to boil in the first charge-air cooler 4, but that is at least 50% greater than the flow at which boiling occurs, preferably at least twice as great as the flow at which boiling occurs, in order to make allowance for uneven temperature distributions etc in the high-efficiency first charge-air cooler 4.

In choosing the magnitude of the second coolant flow m2, the total pressure drop should also be taken into account, especially in embodiments where the first charge-air cooler 4 and the retarder cooler 17 are connected in parallel (see Figs 1-2). A relatively large second coolant flow m2, which amounts to, for example, 20-50% of the first coolant flow m1, may sometimes prove to be optimal in terms of pressure drop. As stated above, in case of a malfunction the priority valve 35 is adapted to remain open to direct the coolant to the first charge-air cooler 4. If the hydraulic oil in the retarder 14 becomes too hot, a temperature relay will be tripped, disconnecting the braking effect of the retarder 14. To avoid losing too much of the braking effect in the retarder 14 under such circumstances, the second coolant flow m2 should not exceed 40%, more preferred 35%, of the first coolant flow m1, at least 60% and 65%, respectively, of the first coolant flow m1 in the form of the third coolant flow m3 being, at all events, supplied to the retarder cooler 17.

It will be appreciated that various modifications of the embodiments described above are possible within the scope of the invention.

Thus, the first charge-air cooler 4 and the retarder cooler 17, which are both liquid-cooled, may be designed in a number of ways. The first charge-air cooler and/or the retarder cooler may, for instance, comprise baffles that forces the coolant flow to pass the tubes several times. The coolers may also be of another type, for example "tube-and-fin", according to which the tubes are provided with cooling flanges for improved heat transfer. When using "tube-and-shell" or "tube-and-fin", the coolant as well as the charge air or, alternatively, the hydraulic oil may be caused to flow either on the outside of the tubes or inside them, as long as the end plates provide a satisfactory seal preventing the fluids from mixing. It is also possible to use plate heat exchangers and other types of high-efficiency heat exchangers suitable for transferring heat from a gas or a hydraulic oil to a liquid.

The compressor 3 acting to compress the charge air may be operated by the exhaust gases of the engine 9, as described above, or in any other way, for example by means of the crankshaft of the engine.

Suitably, the system of conduits 22, 23, 24, 25 is designed in such manner that constant fractions of the coolant are conducted, at all times, to the first charge-air cooler 4 and to the retarder cooler 17. One way of achieving this is by choosing suitable diameters for the coolant conduits and, optionally, by introducing other components such as fixed orifice washers, according to methods known to the person skilled in the art, so that the relationship between the pressure drop in the retarder cooler 17 and its conduits 23, 24 and the pressure drop in the first charge-air cooler 4, its conduits 22, 24 and the valve 35 is such that the desirable second and third coolant flows m2 and m3, respectively, will be conducted through the first charge-air cooler 4 and the retarder cooler 17. Correspondingly, this also applies to the conduits 203, 204 and the by-pass conduit 205 in the embodiment shown in Fig. 3.

The opening position of the valves 35 and 101 may also be adjusted so that the desired second coolant flow m2 is directed to the first charge-air cooler 4 when each valve is open. Suitably, this opening position is set at a service station, the valve 35, 101 thus having only an on/off function during operation of the lorry.

The valve 35 may be mounted either upstream of the first charge-air cooler 4, i.e. in the conduit 22, or downstream of the first charge-air cooler 4, i.e. in the conduit 24. Since the flow through the first charge-air cooler 4 is relatively small, the dimensions of the valve will be small. Suitably, the valve 35 should not be mounted in the conduit 23 or 25, since this will increase the risk of not obtaining a full flow through the retarder cooler 17 and since it will be more difficult to control the entire coolant flow to the retarder cooler 17 during a braking operation. The valve may, for example, be a ball valve, a needle valve or a sleeve valve. Suitably, the valve is of "fail-safe" type, i.e. a valve which automatically changes to an open position in the case of a malfunction in its control. The position of he valve 35 may suitably be operated by means of an electric or compressed-air-operated actuator. In the embodiment shown in Fig. 1, the location of the valve and the fact that the pressure drop in the conduit system 22, 35, 4, 23, 24, 17, 25 is such that the desired second and third coolant flows m2 and m3, respectively, are generated when the valve 35 is in its open position mean that only one valve 35 is required to control the flow. It is possible, of course, to use several valves and also to control the valves, for example, for the purpose of varying the coolant flows depending on the cooling load in the first charge-air cooler 4 and the retarder cooler 17. However, such a device, which is more complicated, will be more expensive and less reliable than those illustrated in Figs 1 and 2.

The second charge-air cooler 5 may be cooled by means of ambient air 32 as described above or by means of another low-temperature fluid, such as cooling liquid from a low-temperature coolant circuit. Such a low-temperature coolant circuit usually comprises a separate low-temperature radiator and is normally at least partly separated from the circuit supplying the engine 9 with coolant.

## Claims

1. A cooling device for cooling charge air from a compressor (3) in an engine (9) and hydraulic oil from a retarder (14), in which cooling device a first coolant flow (m1) is provided in a coolant conduit (20),
**characterised in**
**that** the engine (9) is cooled by the whole first coolant flow (m1),
**that** the cooling device has a first charge-air cooler (4), which is cooled by means of a second coolant flow (m2), and a second charge-air cooler (5), which is cooled by means of a low-temperature fluid (32), the charge air being first conducted through the first charge-air cooler (4) and then through the second charge-air cooler (5) upon which it is introduced into the engine (9),
**that** the cooling device further comprises a retarder cooler (17) for cooling hydraulic oil from the retarder (14), said retarder cooler (17) being cooled by means of a third coolant flow (m3), and
**that** both the second coolant flow (m2) and the third coolant flow (m3) are subflows of the first coolant flow (m1).

2. A cooling device according to claim 1, wherein both the retarder cooler (17) and the first charge-air cooler (4) are connected downstream of the engine (9) with regard to the circulation of the coolant.

3. A cooling device according to claim 1 or 2, wherein a coolant circuit (23, 25; 205) is adapted to cause the coolant to by-pass the first charge-air cooler (4) .

4. A cooling device according to claim 3, wherein the first charge-air cooler (4) and the retarder cooler (17) are connected in parallel with regard to the circulation of the coolant, a valve (35; 101) being adapted to cut off the second coolant flow (m2) when the retarder (14) is activated.

5. A cooling device according to claim 4, wherein the valve (35; 101) is a priority valve, which in the case of a malfunction always directs the second coolant flow (m2) to the first charge-air cooler (4) .

6. A cooling device according to any one of the preceding claims, which has a conduit system (20-26, 29, 31, 34) for circulating a coolant and, included therein, a main thermostat (28), which is adapted to supply a portion of the first coolant flow (m1) ranging from 0 to 100% depending on the temperature of said first coolant flow (m1) to a radiator (30), which is cooled by means of ambient air (32), the engine (9), the first charge-air cooler (4) and the retarder cooler (17) being all located in the part (20-26) of the conduit system in which the quantity of coolant flow is essentially unaffected by the main thermostat (28).

7. A cooling device according to any one of the preceding claims, wherein the second coolant flow (m2) is at least 50 % greater than the coolant flow at which the charge air would cause the coolant to boil in the first charge-air cooler (4), but amounts to a maximum of about 35% of said first coolant flow (m1).

8. A cooling device according to claim 7, wherein the first charge-air cooler (4), at the operating point in which the engine (9) develops maximum output and in which the charge air supplied to the first charge-air cooler (4) has a temperature of 200-270°C, presents a maximum charge-air pressure drop of 4000 Pa and a charge-air cooling capacity of more than 5 kW per dm³ cooler volume.

9. A method utilizing a cooling device for cooling charge air from a compressor (3) in an engine (9) and hydraulic oil from a retarder (14), in which cooling device a first coolant flow (m1) is provided in a coolant conduit (20), **characterised in**
**that** the engine (9) is cooled by the whole first coolant flow (m1),
**that** the charge air is first cooled by means of a first charge-air cooler (4) forming part of the cooling device and being cooled by means of a second coolant flow (m2), and is then cooled by means of a second charge-air cooler (5) forming part of the cooling device and being cooled by means of a low-temperature fluid (32), upon which it is introduced into the engine (9),
**that** hydraulic oil from the retarder (14) is cooled by means of a retarder cooler (17) forming part of the cooling device and being cooled by means of a third coolant flow (m3), and
**that** both the second coolant flow (m2) and the third coolant flow (m3) are subflows of the first coolant flow (m1).

10. A method according to claim 9, wherein the first coolant flow (m1) is first conducted through the engine (9) and then used to cool the first charge-air cooler (4) and the retarder cooler (17).

11. A method according to claim 10, wherein the first coolant flow (m1) is divided into a second coolant flow (m2), which is conducted through the first charge-air cooler (4), and a third coolant flow (m3), which is conducted through the retarder cooler (17), which is connected in parallel to the first charge-air cooler (4) with regard to the circulation of the coolant, the second coolant flow (m2) being cut off when the retarder (14) is activated.

12. A method according to claim 11, wherein the second coolant flow (m2) is cut off 1-10 s after the retarder (14) has been activated.

## Patentansprüche

1. Kühlvorrichtung zum Kühlen von Ladeluft von einem Kompressor (3) in einem Motor (9) und Hydrauliköl von einem Retarder (14), wobei in der Kühlvorrichtung ein erster Kühlmittelstrom (m1) in einer Kühlmittelleitung (20) vorgesehen ist,
**dadurch gekennzeichnet, dass**
der Motor (9) durch den gesamten ersten Kühlmittelstrom (m1) gekühlt wird,
die Kühlvorrichtung einen ersten Ladeluftkühler (4), der durch einen zweiten Kühlmittelstrom (m2) gekühlt wird, und einen zweiten Ladeluftkühler (5), der durch ein Niedrigtemperaturfluid (32) gekühlt wird, aufweist, wobei die Ladeluft zunächst durch den ersten Ladeluftkühler (4) und dann durch den zweiten Ladeluftkühler (5) geführt wird, woraufhin sie in den Motor (9) eingeleitet wird,
die Kühlvorrichtung weiterhin einen Retarderkühler (17) zum Kühlen von Hydrauliköl von dem Retarder (14) umfasst, wobei der Retarderkühler (17) durch einen dritten Kühlmittelstrom (m3) gekühlt wird, und
sowohl der zweite Kühlmittelstrom (m2) und der dritte Kühlmittelstrom (m3) Teilströme des ersten Kühlmittelstroms (m1) sind.

2. Kühlvorrichtung nach Anspruch 1, wobei sowohl der Retarderkühler (17) als auch der erste Ladeluftkühler (4) stromabwärts des Motors (9) bezüglich der Zirkulation des Kühlmittels verbunden sind.

3. Kühlvorrichtung nach Anspruch 1 oder 2, wobei ein Kühlmittelkreislauf (23, 25; 205) so ausgelegt ist, dass bewirkt wird, dass das Kühlmittel den ersten Ladeluftkühler (4) umgeht.

4. Kühlvorrichtung nach Anspruch 3, wobei der erste Ladeluftkühler (4) und der Retarderkühler (17) bezüglich der Zirkulation des Kühlmittels parallel geschaltet sind, wobei ein Ventil (35; 101) dazu ausgeführt ist, den zweiten Kühlmittelstrom (m2) zu sperren, wenn der Retarder (14) aktiviert ist.

5. Kühlvorrichtung nach Anspruch 4, wobei das Ventil (35; 101) ein Prioritätsventil ist, das im Falle einer Fehlfunktion den zweiten Kühlmittelstrom (m2) immer zum ersten Ladeluftkühler (4) leitet.

6. Kühlvorrichtung nach einem der vorhergehenden Ansprüche, die ein Leitungssystem (20 - 26, 29, 31, 34) zum Zirkulieren eines Kühlmittels und darin enthalten ein Hauptthermostat (28) aufweist, das dazu ausgeführt ist, einen Teil des ersten Kühlmittelstroms (m1), der in Abhängigkeit von der Temperatur des ersten Kühlmittelstroms (m1) von 0 bis 100% reicht, einem Kühler (30) zuzuführen, der durch Umgebungsluft (32) gekühlt wird, wobei der Motor (9), der erste Ladeluftkühler (4) und der Retarderkühler (17) alle in dem Teil (20 - 26) des Leitungssystems angeordnet sind, in dem die Kühlmittelstrommenge durch den Hauptthermostaten (28) im Wesentlichen nicht beeinflusst wird.

7. Kühlvorrichtung nach einem der vorhergehenden Ansprüche, wobei der zweite Kühlmittelstrom (m2) mindestens 50% größer ist als der Kühlmittelstrom, bei dem die Ladeluft ein Kochen des Kühlmittels im ersten Ladeluftkühler (4) verursachen würde, sich jedoch auf maximal ca. 35% des ersten Kühlmittelstroms (m1) beläuft.

8. Kühlvorrichtung nach Anspruch 7, wobei der erste Ladeluftkühler (4) auf dem Betriebspunkt, auf dem der Motor (9) eine maximale Leistung erzeugt und die dem ersten Ladeluftkühler (4) zugeführte Ladeluft eine Temperatur von 200 - 270º aufweist, einen maximalen Ladeluftdruckabfall von 4000 Pa und eine Ladeluftkühlleistung von mehr als 5 kW pro dm³ Kühlervolumen erzeugt.

9. Eine Kühlvorrichtung zum Kühlen von Ladeluft von einem Kompressor (3) in einem Motor (9) und Hydrauliköl von einem Retarder (14), wobei in der Kühlvorrichtung ein erster Kühlmittelstrom (m1) in einer Kühlmittelleitung (20) vorgesehen ist, verwendendes Verfahren,
**dadurch gekennzeichnet, dass**
der Motor (9) durch den gesamten ersten Kühlmittelstrom (m1) gekühlt wird,
die Ladeluft zunächst durch einen ersten Ladeluftkühler (4), der Teil der Kühlvorrichtung bildet und durch einen zweiten Kühlmittelstrom (m2) gekühlt wird, und dann durch einen zweiten Ladeluftkühler (5), der Teil der Kühlvorrichtung bildet und durch ein Niedrigtemperaturfluid (32) gekühlt wird, gekühlt wird, woraufhin sie in den Motor (9) eingeleitet wird,
Hydrauliköl von dem Retarder (14) durch einen Retarderkühler (17) gekühlt wird, der Teil der Kühlvorrichtung bildet und durch einen dritten Kühlmittelstrom (m3) gekühlt wird, und
sowohl der zweite Kühlmittelstrom (m2) als auch der dritte Kühlmittelstrom (m3) Teilströme des ersten Kühlmittelstroms (m1) sind.

10. Verfahren nach Anspruch 9, wobei der erste Kühlmittelstrom (m1) zunächst durch den Motor (9) geleitet und dann zum Kühlen des ersten Ladeluftkühlers (4) und des Retarderkühlers (17) verwendet wird.

11. Verfahren nach Anspruch 10, wobei der erste Kühlmittelstrom (m1) in einen zweiten Kühlmittelstrom (m2), der durch den ersten Ladeluftkühler (4) geleitet wird, und einen dritten Kühlmittelstrom (m3), der durch den Retarderkühler (17), der zu dem ersten Ladeluftkühler (4) bezüglich der Zirkulation des Kühlmittels parallel geschaltet ist, geleitet wird, unterteilt wird, wobei der zweite Kühlmittelstrom (m2) gesperrt wird, wenn der Retarder (14) aktiviert ist.

12. Verfahren nach Anspruch 11, wobei der zweite Kühlmittelstrom (m2) 1 - 10s nach Aktivierung des Retarders (14) gesperrt wird.

## Revendications

1. Dispositif de refroidissement destiné à refroidir de l'air de suralimentation provenant d'un compresseur (3) dans un moteur (9) et de l'huile hydraulique provenant d'un ralentisseur (14), un premier débit (m1) d'agent de refroidissement étant établi à l'intérieur dudit dispositif de refroidissement dans un conduit (20) d'agent de refroidissement,
**caractérisé en ce que**
le moteur (9) est refroidi par la totalité du premier débit (m1) d'agent de refroidissement,
**en ce que** le dispositif de refroidissement est doté d'un premier refroidisseur (4) d'air de suralimentation, refroidi au moyen d'un deuxième débit (m2) d'agent de refroidissement, et d'un deuxième refroidisseur (5) d'air de suralimentation, refroidi au moyen d'un fluide (32) à basse température, l'air de suralimentation étant d'abord canalisé à travers le premier refroidisseur (4) d'air de suralimentation puis à travers le deuxième refroidisseur (5) d'air de suralimentation, suite à quoi il est introduit dans le moteur (9),
**en ce que** le dispositif de refroidissement comporte en outre un refroidisseur (17) de ralentisseur destiné à refroidir de l'huile hydraulique provenant du ralentisseur (14), ledit refroidisseur (17) de ralentisseur étant refroidi au moyen d'un troisième débit (m3) d'agent de refroidissement, et
**en ce que** le deuxième débit (m2) d'agent de refroidissement et le troisième débit (m3) d'agent de refroidissement sont tous deux des débits prélevés sur le premier débit (m1) d'agent de refroidissement.

2. Dispositif de refroidissement selon la revendication 1, le refroidisseur (17) de ralentisseur et le premier refroidisseur (4) d'air de suralimentation étant tous deux raccordés en aval du moteur (9) par rapport à la circulation de l'agent de refroidissement.

3. Dispositif de refroidissement selon la revendication 1 ou 2, un circuit (23, 25 ; 205) d'agent de refroidissement étant prévu pour amener l'agent de refroidissement à contourner le premier refroidisseur (4) d'air de suralimentation.

4. Dispositif de refroidissement selon la revendication 3, le premier refroidisseur (4) d'air de suralimentation et le refroidisseur (17) de ralentisseur étant raccordés en parallèle par rapport à la circulation de l'agent de refroidissement, un clapet (35 ; 101) étant prévu pour couper le deuxième débit (m2) d'agent de refroidissement lorsque le ralentisseur (14) est activé.

5. Dispositif de refroidissement selon la revendication 4, le clapet (35 ; 101) étant un clapet préférentiel qui, en cas de mauvais fonctionnement, dirige toujours le deuxième débit (m2) d'agent de refroidissement vers le premier refroidisseur (4) d'air de suralimentation.

6. Dispositif de refroidissement selon l'une quelconque des revendications précédentes, doté d'un système (20-26, 29, 31, 34) de conduits destiné à faire circuler un agent de refroidissement et, compris dans celui-ci, un thermostat principal (28), adapté pour amener une fraction du premier débit (m1) d'agent de refroidissement variant de 0 à 100 %, en fonction de la température dudit premier débit (m1) d'agent de refroidissement, jusqu'à un radiateur (30) qui est refroidi au moyen d'air ambiant (32), le moteur (9), le premier refroidisseur (4) d'air de suralimentation et le refroidisseur (17) de ralentisseur étant tous situés dans la partie (20-26) du système de conduits dans laquelle l'importance du débit d'agent de refroidissement n'est essentiellement pas affectée par le thermostat principal (28).

7. Dispositif de refroidissement selon l'une quelconque des revendications précédentes, le deuxième débit (m2) d'agent de refroidissement étant supérieur d'au moins 50 % au débit d'agent de refroidissement pour lequel l'air de suralimentation porterait à ébullition l'agent de refroidissement dans le premier refroidisseur (4) d'air de suralimentation, mais représente au maximum environ 35 % dudit premier débit (m1) d'agent de refroidissement.

8. Dispositif de refroidissement selon la revendication 7, le premier refroidisseur (4) d'air de suralimentation, au point de fonctionnement où le moteur (9) développe sa puissance maximale et où l'air de suralimentation amené au premier refroidisseur (4) d'air de suralimentation se trouve à une température de 200-270°C, présentant une chute de pression maximale d'air de suralimentation de 4000 Pa et une capacité de refroidissement d'air de suralimentation de plus de 5 kW par dm³ de volume du refroidisseur.

9. Procédé utilisant un dispositif de refroidissement destiné à refroidir de l'air de suralimentation provenant d'un compresseur (3) dans un moteur (9) et de l'huile hydraulique provenant d'un ralentisseur (14), un premier débit (m1) d'agent de refroidissement étant établi à l'intérieur dudit dispositif de refroidissement dans un conduit (20) d'agent de refroidissement,
**caractérisé en ce que**
le moteur (9) est refroidi par la totalité du premier débit (m1) d'agent de refroidissement,
**en ce que** l'air de suralimentation est d'abord refroidi au moyen d'un premier refroidisseur (4) d'air de suralimentation faisant partie du dispositif de refroidissement et étant refroidi au moyen d'un deuxième débit (m2) d'agent de refroidissement, et étant ensuite refroidi au moyen d'un deuxième refroidisseur (5) d'air de suralimentation faisant partie du dispositif de refroidissement et étant refroidi au moyen d'un fluide (32) à basse température, suite à quoi il est introduit dans le moteur (9),
**en ce que** de l'huile hydraulique provenant du ralentisseur (14) est refroidie au moyen d'un refroidisseur (17) de ralentisseur faisant partie du dispositif de refroidissement et étant refroidi au moyen d'un troisième débit (m3) d'agent de refroidissement, et
**en ce que** le deuxième débit (m2) d'agent de refroidissement et le troisième débit (m3) d'agent de refroidissement sont tous deux des débits prélevés sur le premier débit (m1) d'agent de refroidissement.

10. Procédé selon la revendication 9, le premier débit (m1) d'agent de refroidissement étant d'abord canalisé à travers le moteur (9) puis utilisé pour refroidir le premier refroidisseur (4) d'air de suralimentation et le refroidisseur (17) de ralentisseur.

11. Procédé selon la revendication 10, le premier débit (m1) d'agent de refroidissement étant divisé en un deuxième débit (m2) d'agent de refroidissement, qui est canalisé à travers le premier refroidisseur (4) d'air de suralimentation, et un troisième débit (m3) d'agent de refroidissement, qui est canalisé à travers le refroidisseur (17) de ralentisseur, lequel est raccordé en parallèle avec le premier refroidisseur (4) d'air de suralimentation par rapport à la circulation de l'agent de refroidissement, le deuxième débit (m2) d'agent de refroidissement étant coupé lorsque le ralentisseur (14) est activé.

12. Procédé selon la revendication 11, le deuxième débit (m2) d'agent de refroidissement étant coupé 1 à 10 s après que le ralentisseur (14) a été activé.
